# EUROPÄISCHE PATENTSCHRIFT

(11) **EP 2 577 060 B1**
(45) Veröffentlichungstag und Bekanntmachung des Hinweises auf die Patenterteilung: **04.03.2015**
(21) Anmeldenummer: 11727906.7
(22) Anmeldetag: 30.05.2011
(51) Int. Cl.: F03G 3/06

(54) **VORRICHTUNG ZUR UMWANDLUNG VON KINETISCHER ENERGIE IN ELEKTRISCHE ENERGIE**
DEVICE FOR CONVERTING KINETIC ENERGY INTO ELECTRICAL ENERGY
DISPOSITIF DE TRANSFORMATION D'ÉNERGIE CINÉTIQUE EN ÉNERGIE ÉLECTRIQUE

(30) Priorität: 07.06.2010 AT 9242010
(43) Veröffentlichungstag der Anmeldung: 10.04.2013
(73) Patentinhaber: Eichhorn, Karl, 1230 Wien (AT)
(72) Erfinder: Eichhorn, Karl, 1230 Wien (AT)
(74) Vertreter: Holzer, Walter
(86) Internationale Anmeldenummer: PCT/AT2011/000245
(87) Internationale Veröffentlichungsnummer: WO 2011/153563

(56) Entgegenhaltungen:
- WO-A1-2005/024227
- WO-A1-2008/077164
- WO-A2-2009/004645
- WO-A2-2010/056956
- GB-A- 109 123
- RO-B1- 122 313
- SU-A1- 735 822
- US-A- 4 852 350

## Beschreibung

Die Erfindung betrifft eine Vorrichtung zur Umwandlung kinetischer Energie in elektrische Energie, mit einem eine Pendelstange und ein Pendelgewicht umfassenden Pendel, welches auf einer Welle schwingend aufgehängt ist, wobei das Pendel in einem kippbaren Rahmen aufgehängt ist, dessen Kippachse unterhalb einer Schwingbahn des Pendels und parallel zur Pendelachse liegt, und wobei eine Schubstange eines mit Energie versorgten hydraulischen oder pneumatischen Antriebszylinders für den Pendelantrieb mit dem Rahmen verbunden und der Antriebszylinder an die elektrische Energie umwandelnden Elemente der Vorrichtung angelenkt ist.

Vorrichtungen dieser Art eignen sich zur Umwandlung potentieller und kinetischer Energie, insbesondere pulsartiger Energie in elektrische Energie, wo diese nicht vorhanden ist. Sie können zudem als Vorführmodelle, als technisches Spielzeug oder als Unterrichtsmodelle zur experimentellen Darstellung von Energieumwandlungen und Wirkungsgraden verwendet werden.

Die WO 2005/024227 A1, die als nächstliegender Stand der Technik angesehen wird, offenbart einen Mechanismus zur Energieerzeugung mit zwei parallel aufgehängten Pendeln, die über ein Kupplungsgetriebe an ihrem Drehpunkt einen Generator antreiben. Die Schwingungsenergie erhalten die Pendel durch jeweils zwei Kicker-Antriebe. Erreicht ein Pendel den vorbestimmten Punkt der größten Auslenkung, erhält es von dem jeweils dort angeordneten Kicker einen Stoß, um mit weiterer Energie zurückzuschwingen. Ein Nachteil dieser Konstruktion ist, daß jedes Pendel aufwendigerweise zwei Kicker-Antriebe hat. Ferner können die Pendel nur bei einem einzigen Energieniveau schwingen, welches durch den unveränderlichen Auslenkungswinkel bis zur Kick-Position festgelegt ist. Liegt eine Energieform nicht ideal pulsartig vor, so ist sie zum Antrieb des Mechanismus pulsartig umzuformen; auch darin liegt ein Nachteil. Weiters entsteht an den Kicker-Antrieben und den Kicker-Flächen der beiden Pendel ein mechanischer Verschleiß. Schließlich stellt der Kicker-Antriebstyp eine nachteilige laute Schallquelle dar.

Die AT 504 707 A1, auch veröffentlicht als WO 2008/077164 A1, offenbart eine Schwungkraftmaschine zur Umwandlung kinetischer Energie in elektrische Energie mittels eines Doppelpendels, welches über ein Kupplungsgetriebe an seinem oberen Drehpunkt einen Generator antreibt. Seine Schwingungsenergie erhält das Doppelpendel durch zwei Stellzylinder, die über Hebelarme am oberen Teil des Doppelpendels ein Einknicken des Doppelpendels bewirken. Durch eine geeignete Regelung der Stellzylinder schwingt das Doppelpendel ohne äußere mechanische Einwirkung. Der Nachteil dieser Ausführung besteht darin, daß die umzuwandelnde Energie, wie etwa Druckluft, von außen dem schwingenden Pendel zugeführt werden muß. Dazu wären beispielsweise biegsame Schläuche erforderlich, die die Schwingung dämpfen und Verschleißteile darstellen. Zudem ist das Doppelpendel aufwendig konstruiert und bedarf einer aufwendigen Regelung, um nicht chaotisch zu schwingen. Bei chaotischem Schwingen würde zwar auch elektrische Energie erzeugt, doch würde dies unregelmäßig geschehen und wäre durch zusätzliche Mittel zu puffern und zu glätten.

Die US 4 852 350 lehrt einen Energiegenerator. In einer Ausführungsform wird die Rotationsenergie eines Motors in kinetische Energie eines Pendels umgewandelt, welche wiederum in potentielle Energie eines unter Druck stehenden Fluids umgewandelt wird, die schließlich bei Expansion des Fluids in einer Turbine wiederum einen rotierenden Generator antreibt, welcher Strom generiert. In einer weiteren Ausführungsform der US 4 852 350 wird die Rotationsenergie mittels Kurbelstange auf schwingende Pendel übertragen, deren Pendelenden in ihrer ausgeschwenkten Position durch Federn einen weiteren Energieeintrag erhalten. Die derart bewegten Pendel bringen ihrer kinetische Energie mittels Kurbelstange wieder in den rotierenden Generator ein. Nachteilig an dieser Lehre ist, daß jeweils am Anfang und am Ende der Energiewandelkette elektrische Energie vorliegt. Eine Umwandlung einer ersten Energieform insgesamt in eine andere ist also nicht vorgesehen. Weiters ist nachteilig, daß aufwendige mechanische Konstruktionen erforderlich sind, die zu einer Verringerung des Wirkungsgrades führen.

Die RO 122313 B1 zeigt eine Vorrichtung zum Umwandeln von kinetischer Energie in elektrische. Dabei sind Pendel in kippbaren Rahmen aufgehängt. Die Rahmen werden periodisch gekippt, woraufhin die Pendel schwingen und über angelenkte Pleuelstangen eine Achse antreiben, die wiederum mit einem Generator verbunden ist. Der mechanisch komplizierte Aufbau dieser Lehre wirkt sich negativ auf den zuverlässigen Betrieb und den Wirkungsgrad aus.

Die Erfindung zielt darauf ab, eine Vorrichtung der einleitend angegebenen Art zu schaffen, die eine einfache Konstruktion und dadurch wenig Reibungs- und andere Verluste aufweist und somit einen hohen Wirkungsgrad hat. Sie zielt zudem darauf ab, nicht ideal pulsartige kinetische Energieformen umzuwandeln.

Die erfindungsgemäße Vorrichtung zeichnet sich dadurch aus, daß die Vorrichtung einen mit der Welle verbundenen Generator, durch welchen die Rotationsenergie des Pendels in elektrische Energie umwandelbar ist, aufweist, wobei weiters ein Mittel vorgesehen ist, durch welches das Pendel starr mit der Welle verbunden ist, wenn es in einer vorbestimmten Richtung schwingt.

Gemäß einer Weiterbildung der Erfindung weist die Welle eine mit ihr fest verbundene Wellenscheibe und die Pendelstange mindestens einen Backensattel und mindestens eine darin beweglich gehalterte Greifbacke auf, durch welche die Pendelstange über die Wellenscheibe starr mit der Welle verbindbar ist. Vorzugsweise ist die Pendelstange drehbar mit der Welle verbunden. Gemäß einer Weiterbildung der Erfindung ist die Pendelstange drehbar mit der Wellenscheibe verbunden.

Vorzugsweise ist der Antriebszylinder über eine zugeordnete Regeleinrichtung periodisch betätigbar.

Nach einem anderen Erfindungsmerkmal weist die Vorrichtung ein Schwungrad auf, das durch die Welle antreibbar ist, um eine gesteigert gleichmäßige Drehgeschwindigkeit der Welle zu bewirken.

Gemäß einer Weiterbildung der Erfindung hat die Vorrichtung zwei oder mehr Pendel, die parallel auf der Welle angeordnet sind.

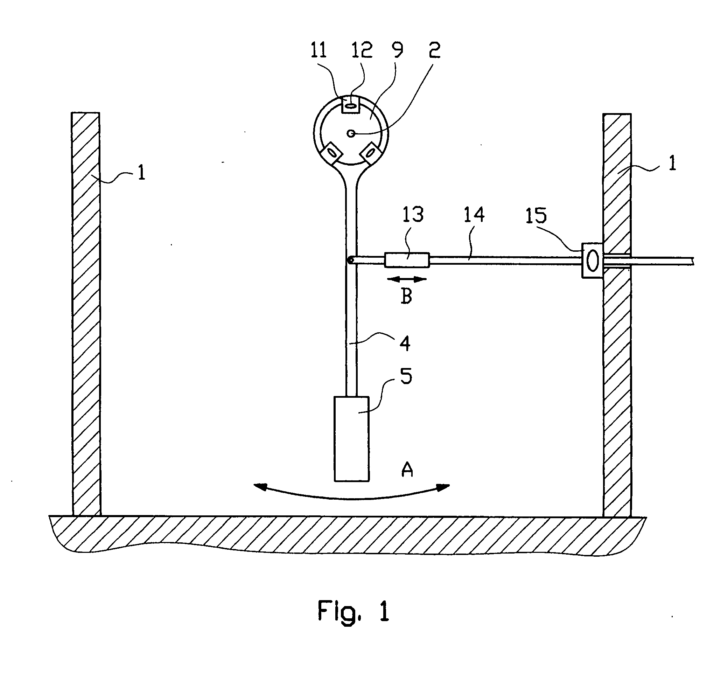

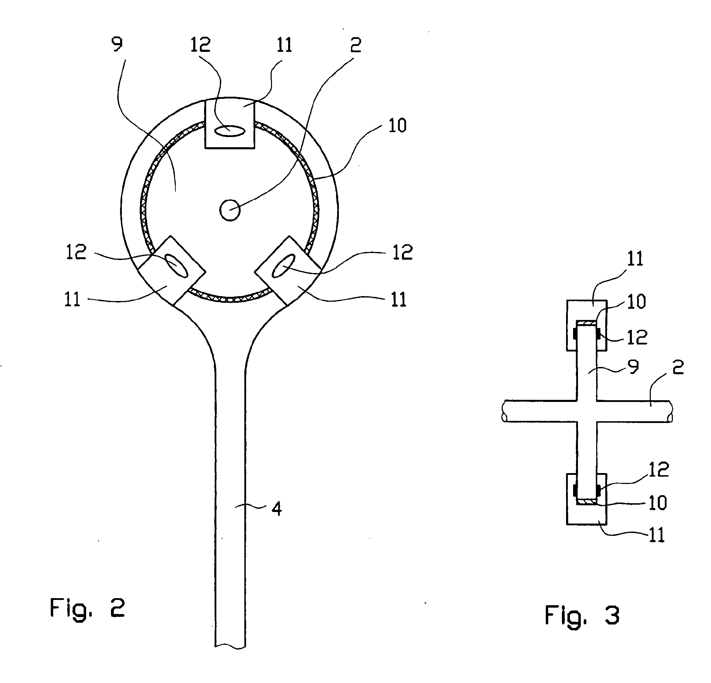

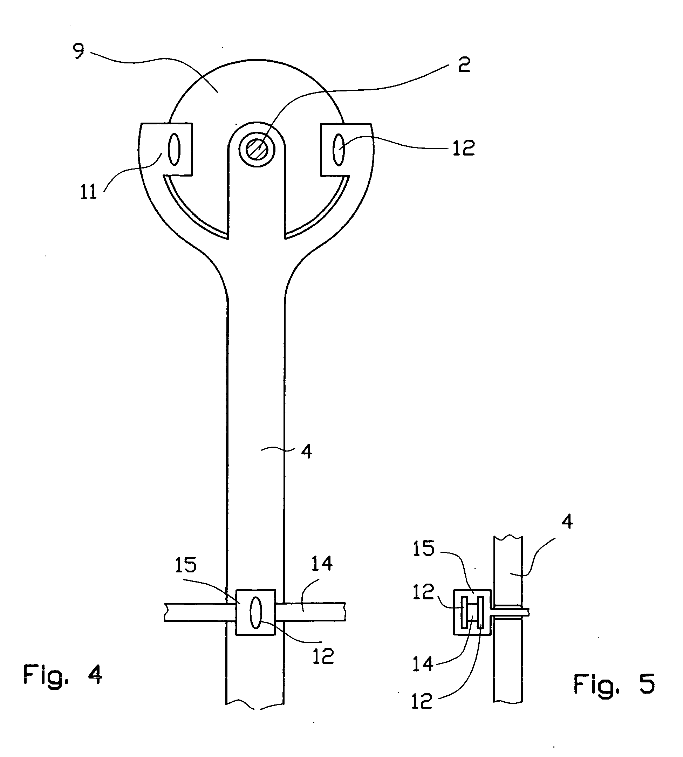

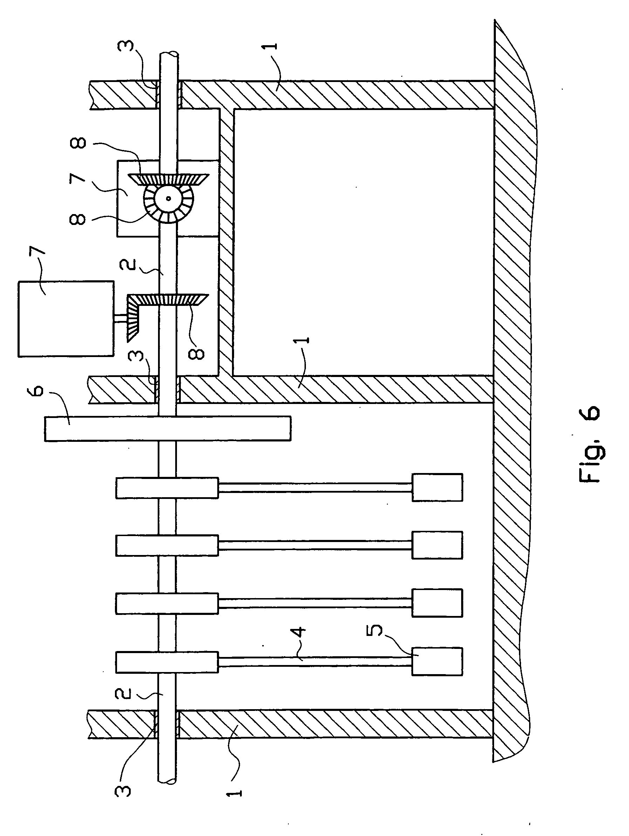

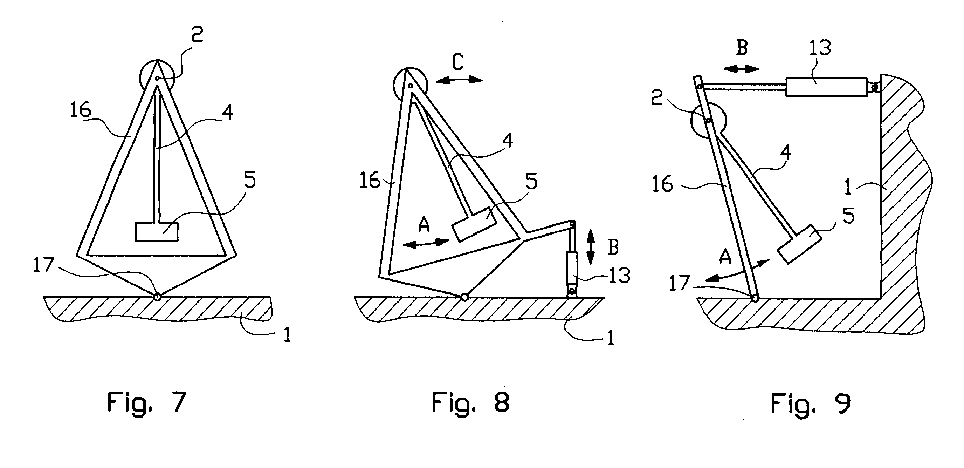

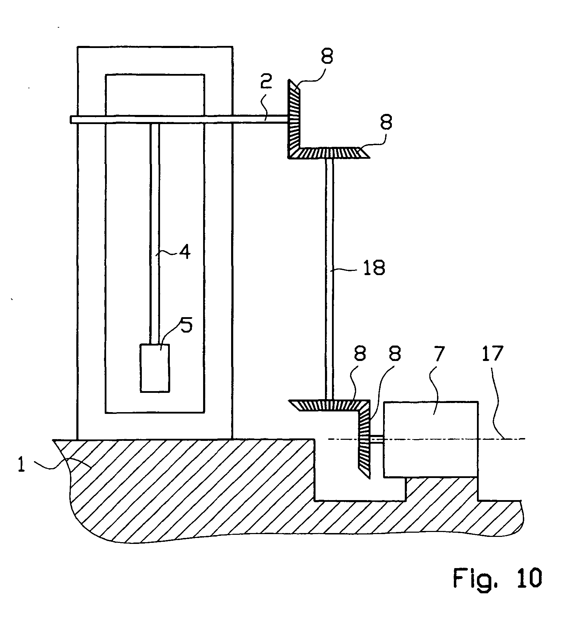

Die Erfindung wird nachfolgend an einem Ausführungsbeispiel unter Bezugnahme auf die Zeichnungen näher erläutert. Es zeigen: Fig. 1 eine schematische Ansicht einer Vorrichtung gemäß eines Beispiels, das nicht Teil der Erfindung ist; Fig. 2 eine Aufhängung des Pendels; Fig. 3 eine Seitenansicht der Aufhängung nach Fig. 2; Fig. 4 eine Aufhängung des Pendels; Fig. 5 eine Seitenansicht einer Verbindung des Antriebszylinders mit der Pendelstange; Fig. 6 eine Seitenansicht der Vorrichtung gemäß eines weiteren Beispiels, das nicht Teil der Erfindung ist; die Fig. 7 und 8 eine schematische Ansicht einer Ausführungsform der Erfindung; Fig. 9 eine schematische Seitenansicht einer zweiten Ausführungsform; und Fig. 10 eine schematische Vorderansicht der zweiten Ausführungsform.

Die in Fig. 1 dargestellte Vorrichtung weist mindestens ein starres Pendel auf, das auf einer durchgehenden Welle 2 gelagert ist. Der Einfachheit halber ist in Fig. 1 nur ein Pendel durch eine Pendelstange 4 und ein Pendelgewicht 5 gebildetes Pendel gezeigt. Die Pendelachse liegt, wie unmittelbar aus den Fig. 1, 2, 4 und 6 hervorgeht, in der Rotationsachse der Welle 2. Die Kraftübertragung von der Welle 2 auf einen in Fig. 1 nicht gezeigten Generator zur Erzeugung von elektrischer Energie erfolgt über eine Wellenscheibe 9, die starr mit der Welle 2 verbunden ist. Das Pendel ist mit Greifbacken 12 ausgestattet, über welche die Kraftübertragung vom Pendel auf die Wellenscheibe 9 geregelt wird. Die Greifbacken 12 sind in einem die Wellenscheibe 9 umgreifenden Backensattel 11 angeordnet. Durch einen Antriebszylinder 13, der in Richtung des Pfeiles B hin- und herbewegbar ist, wird das Pendel in eine pendeltypische Schwingungsbewegung entlang der Schwingbahn A versetzt. Dazu ist der Antriebszylinder über eine Schubstange 14 mit der Pendelstange 4 und mit einem Bauwerk 1 verbunden. In dem Bauwerk ist auch die Welle 2 drehbar gelagert (nicht in Fig. 1 gezeigt). Da aufgrund der Auslenkung des Pendels die räumlichen Abstände und Winkel zwischen dem Angriffspunkt der Schubstange 14 an die Pendelstange 4 und der Schubstange 14 mit dem Bauwerk 1 veränderlich sind, ist die Schubstange 14 an die Pendelstange 4 angelenkt und weist eine ebensolche Anlenkung in Form einer Schubstangenfixierung 15 an dem Bauwerk 1 auf. Wird der Antriebszylinder nun periodisch mit einer Energie in Form von beispielsweise Druckluft, Hydraulik oder ähnlichem beaufschlagt, schwingt das Pendel und nimmt kinetische Energie sowie im Schwerefeld der Erde auch potentielle Energie auf. Die potentielle Energie wird in kinetische Energie umgewandelt, sobald das Pendel aus einer ausgelenkten Position in eine Grundposition zurückschwingt. Wenn in dieser Phase die Greifbacken 12 an der Wellenscheibe 9 angreifen, wird durch die Pendelbewegung die Welle 2 ebenfalls in Bewegung versetzt.

Da eine gleichmäßige Drehung der Welle 2 bewirkt werden soll, lassen die Greifbacken 12 einen bestimmten Schlupf zu, wenn das Pendel zu langsam oder in entgegengesetzter Richtung zur gewünschten Drehrichtung der Welle 2 schwingt.

Der Antriebszylinder 13 für den Antrieb des Pendels kann ein hydraulischer Zylinder, ein pneumatischer Zylinder usw. sein. Im allgemeinen kann hier jede Form von Energie genutzt werden, beispielsweise die potentielle Energie natürlichen oder künstlichen Wasserdampfes, Stöße, menschlicher oder tierischer Schub und dergleichen. Die Energie kann in pulsartiger Form oder in Form langgezogener Pulse vorliegen oder zuvor in eine solche Form gebracht werden. Liegt elektrische Energie pulsartig vor, kann sie durch die Vorrichtung zunächst in kinetische Energie (Pendelschwung) und anschließend in konstante elektrische Energie umgewandelt werden. Die Antriebsform der Zylinder zusammen mit der Energiespeicherung in schwingenden Pendeln führt zu einer Konvertierung kurzer starker Energiepulse in eine konstante elektrische Energieform etwas geringerer Größe.

Gemäß Fig. 2 bildet das mit der Welle 2 verbundene Ende der Pendelstange 4 einen Ring, der mit einem Gelenk 10, beispielsweise in Form eines Kugellagers, die Wellenscheibe 9 der Welle 2 einfaßt. Der Ring weist Backensättel 11 auf, deren Greifbacken an die Wellenscheibe 9 anpreßbar sind. In Fig. 3, einer geschnittenen Seitenansicht der Vorrichtung nach Fig. 2, ist dargestellt, daß die Wellenscheibe 9 starr mit der Welle 2 verbunden ist.

Gemäß Fig. 4 ist das entsprechende Ende der Pendelstange 4 U-förmig bzw. gabelförmig ausgebildet und umgreift die Wellenscheibe 9. Die Pendelstange 4 ist bei dieser Lösung direkt mit der Welle drehbar verbunden. Gemäß Fig. 4 und 5 ist die Schubstangenfixierung 15 an der Pendelstange 4 angeordnet. Die Schubstangenfixierung 15 unterscheidet sich von einem Gelenk durch auch hier vorgesehene Greifbacken 12. Dadurch kann das Pendel in der Grundposition oder in einer ausgelenkten Position fixiert werden (etwa bei Betriebspausen), ohne daß der Antriebszylinder 13 hierfür dauerhaft mit einem Druckwert beaufschlagt werden muß.

In Fig. 6 ist die Vorrichtung mit beispielhaften vier parallel auf einer Welle 2 aufgehängten Pendeln dargestellt. Die Welle 2 ist in Wellenlagern 3 mit dem Bauwerk 1 verbunden. Jedes Pendel ist mit einem hier nicht gezeigten jeweils eigenen Antriebszylinder verbunden. Über die Welle 2 werden Energie erzeugende Generatoren 7 z.B. über Kegelzahnräder 8 angetrieben. Durch vier phasenverschoben schwingende Pendel ist gewährleistet, daß die Schwungkraftmaschine im Dauerbetrieb arbeiten kann. Zusätzlich kann ein massereiches Schwungrad 6 einen gleichmäßigen Lauf der Welle 2 fördern, da es die temporären Energieeinträge einzelner Pendel dämpft bzw. puffert.

Bei einer in den Fig. 7 und 8 dargestellten Ausführungsform der Erfindung ist die Pendelstange 4 in einem Rahmen 16 aufgehängt und treibt wiederum eine in der Achse des Pendels liegende Welle 2 an. Der Rahmen 16 sitzt auf einer Kippachse 17 auf dem Boden 1 eines Bauwerkes, einer Rahmenkonstruktion, eines Tisches od.dgl. Die Kippachse 17 kann als Gelenk oder, in einer einfacheren Form, als auf einer Ebene aufgesetzter Keil ausgeführt sein. Die Geometrie des Rahmens 16 ermöglicht das Kippen desselben um die Kippachse 17. Es wird also gemäß Fig. 8 ein Antriebszylinder 13 an den Rahmen 16 angelenkt, wobei der Antriebszylinder eine Bewegung in Richtung des Pfeiles B ausführt, wodurch der Rahmen 16 periodisch entlang der Kippbahn C schwingt und dabei die Schwingungsbewegung auf die Pendelstange 4 überträgt. Der Rahmen 16 kann auch durch andersartige periodische oder nahezu periodische Energieformen zum Kippen gebracht werden. Vorausgesetzt ist nur, daß die Kippkraft über eine Distanz entfernt von der Kippachse 17 in den Rahmen 16 eingetragen wird, um einen Hebelarm zu bilden. Vorteilhaft ist hier, daß nicht ein schweres Pendelgewicht 5, sondern ein im Vergleich dazu masseärmerer Rahmen 16 zu Beginn der Pendelbewegung ausgelenkt werden muß. Das Pendelgewicht 5 wird dann durch die Schwerkraft zur Bewegung gebracht und kann sofort einen Generator (nicht gezeigt) antreiben. Die Energieumwandlung ist daher aus dem Stand heraus durchführbar, und eine aufwendige Kupplung über Greifbacken 12, Backensättel 11 und einer Wellenscheibe 9 samt Steuereinrichtung kann entfallen. Statt dessen ist die Pendelstange 4 mit der Welle 2 über ein herkömmliches Ratschensystem verbunden. Das Ratschensystem läßt das Pendel in einer Richtung frei schwingen und verbindet es mit der Welle 2 in der anderen Richtung starr, um die Rotationsenergie des Pendels auf die Welle 2 und den angeschlossenen Generator 7 zu übertragen.

In Fig. 9 ist der Antriebszylinder oberhalb der Welle 2 an den Rahmen 16 angelenkt. Bereits geringe Auslenkungen des Rahmens 16 können bei geeigneter periodischer Ansteuerung des Antriebszylinders 13 zu einem Aufschaukeln des Pendels führen, aus welchem anschließend mehr Energie entnommen wird. Der Rahmen 16 ist in Fig. 9 von der Seite gezeigt und in Fig. 10 von vorn. Wie in Fig. 10 gezeigt, kann die Rotationsenergie des Pendels über die Welle 2 mittels weiterer Wellen und Kegelzahnräder 8 an einen Generator 7 weitergegeben werden. Hier ist zu beachten, daß das Pendelsystem inklusive Rahmen 16 kontinuierlich um die Kippachse 17 herum pendelt. Eine Möglichkeit, die Rotationsenergie über Wellen zu entnehmen, zeigt Fig. 10. Eine mit dem schwankenden Rahmen 16 mitgeführte Welle 18 bewegt einen Generator 7, dessen Achse in der Kippachse 17 des Rahmens 16 liegt. Auf diese Weise kann der Generator 7 feststehend sein und Rotationsenergie des Pendels über die mit dem Rahmen 16 mitschwankende Welle 2 mitgeteilt bekommen.

Es versteht sich, daß die geschilderten Ausführungsbeispiele im Rahmen des Erfindungsgedankens verschiedentlich abwandelbar sind, z.B. hinsichtlich der Art des Antriebs des oder der Pendel, des Wandelmittels der Wellenrotation in elektrische Energie oder der Kupplung von Pendel und Welle.

## Patentansprüche

1. Vorrichtung zur Umwandlung kinetischer Energie in elektrische Energie mit einem eine Pendelstange (4) und ein Pendelgewicht (5) umfassenden Pendel, welches auf einer Welle (2) schwingend aufgehängt ist, wobei das Pendel in einem kippbaren Rahmen (16) aufgehängt ist, dessen Kippachse (17) unterhalb einer Schwingbahn (A) des Pendels und parallel zur Pendelachse liegt, und wobei eine Schubstange (14) eines mit Energie versorgten hydraulischen oder pneumatischen Antriebszylinders (13) für den Pendelantrieb mit dem Rahmen (16) verbunden und der Antriebszylinder (13) an die elektrische Energie umwandelnden Elemente der Vorrichtung angelenkt ist, **dadurch gekennzeichnet, daß** die Vorrichtung einen mit der Welle (2) verbundenen Generator (7), durch welchen die Rotationsenergie des Pendels in elektrische Energie umwandelbar ist, aufweist, wobei weiters ein Mittel vorgesehen ist, durch welches das Pendel starr mit der Welle (2) verbunden ist, wenn es in einer vorbestimmten Richtung schwingt.

2. Vorrichtung nach Anspruch 1, **dadurch gekennzeichnet, daß** der Antriebszylinder (13) über eine zugeordnete Regeleinrichtung periodisch betätigbar ist.

3. Vorrichtung nach Anspruch 1 oder 2, **dadurch gekennzeichnet, daß** die Vorrichtung ein Schwungrad (6) aufweist, das durch die Welle (2) antreibbar ist, um eine gesteigert gleichmäßige Drehgeschwindigkeit der Welle (2) zu bewirken.

4. Vorrichtung nach einem der Ansprüche 1 bis 3, **dadurch gekennzeichnet, daß** die Vorrichtung zwei oder mehr Pendel aufweist, die parallel auf der Welle (2) angeordnet sind.

## Claims

1. A device for converting kinetic energy into electrical energy, comprising: a pendulum which includes a pendulum rod (4) and a pendulum weight (5) and is suspended in oscillating fashion on a shaft (2), wherein the pendulum is suspended in a tiltable frame (16), the tilt axis (17) of which is located below an oscillation path (A) of the pendulum and parallel to the pendulum axis, and wherein a push rod (14) of a hydraulic or pneumatic drive cylinder (13) supplied with energy for the pendulum drive is connected to the frame, and the drive cylinder is pivotably connected to the elements of the device that convert the electrical energy, **characterised in that** the device comprises a generator (7) connected to the shaft (2) and configured to convert the rotational energy of the pendulum into electrical energy, wherein there are furthermore means by which the pendulum is rigidly connected to the shaft (2) when it oscillates in a predetermined direction.

2. The device according to claim 1, wherein the drive cylinder (13) is periodically actuatable via an associated regulator.

3. The device according to claim 1 or 2, wherein the device has a flywheel (6), which is drivable by the shaft (2) in order to effect an enhanced uniform rotary speed of the shaft (2).

4. The device according to one of claims 1 to 3, wherein the device has two or more pendulums, which are located parallel on the shaft (2).

## Revendications

1. Dispositif de conversion d'une énergie cinétique en une énergie électrique, équipé d'un pendule comprenant une tige de pendule (4) et un poids de pendule (5), lequel pendule est suspendu de manière oscillante sur un arbre (2), dans lequel le pendule est suspendu dans un cadre (16) basculant, dont l'axe de basculement (17) se trouve en dessous d'une trajectoire d'oscillation (A) du pendule et est parallèle à l'axe du pendule, et dans lequel une tige de poussée (14) d'un cylindre de commande (13) hydraulique ou pneumatique alimenté en énergie est reliée au cadre (16) pour l'entraînement du pendule et où le cylindre de commande (13) est articulé au niveau des éléments du dispositif qui convertissent en énergie électrique, **caractérisé en ce que** le dispositif présente un générateur (7) relié à l'arbre (2), lequel permet de convertir l'énergie de rotation du pendule en une énergie électrique, un moyen étant en outre prévu, grâce auquel le pendule est relié de manière fixe à l'arbre (2) lorsqu'il oscille dans une direction prédéterminée.

2. Dispositif selon la revendication 1, **caractérisé en ce que** le cylindre de commande (13) peut être actionné de manière périodique par l'intermédiaire d'un système de réglage associé.

3. Dispositif selon la revendication 1 ou 2, **caractérisé en ce que** le dispositif présente un volant (6), qui peut être entraîné par l'arbre (2) afin d'obtenir une vitesse de rotation de l'arbre (2) en constante augmentation.

4. Dispositif selon l'une quelconque des revendications 1 à 3, **caractérisé en ce que** le dispositif présente deux pendules ou plus, qui sont disposés de manière parallèle sur l'arbre (2).
